**Europäisches Patentamt**

**European Patent Office**

**Office européen des brevets**

(19)

(11) **EP 1 025 423 B1**

(12) **EUROPÄISCHE PATENTSCHRIFT**

(45) Veröffentlichungstag und Bekanntmachung des Hinweises auf die Patenterteilung:
**21.11.2001 Patentblatt 2001/47**

(51) Int Cl.⁷: **G01C 21/20**

(21) Anmeldenummer: **98955356.5**

(22) Anmeldetag: **30.09.1998**

(86) Internationale Anmeldenummer:
**PCT/DE98/02891**

(87) Internationale Veröffentlichungsnummer:
**WO 99/20981 (29.04.1999 Gazette 1999/17)**

(54) **VERFAHREN UND ANORDNUNG ZUR ERMITTLUNG EINER ROUTE VON EINEM STARTPUNKT ZU EINEM ZIELPUNKT**

METHOD AND DEVICE FOR DETERMINING A ROUTE FROM THE ORIGINATING POINT TO THE TERMINATING POINT

PROCEDE ET DISPOSITIF DE DETERMINATION D'UNE ROUTE DEPUIS LE POINT DE DEPART AU POINT D'ARRIVEE

(84) Benannte Vertragsstaaten:
**AT BE CH DE FR GB IT LI NL**

(30) Priorität: **21.10.1997 DE 19746417**

(43) Veröffentlichungstag der Anmeldung:
**09.08.2000 Patentblatt 2000/32**

(73) Patentinhaber: **SIEMENS AKTIENGESELLSCHAFT
80333 München (DE)**

(72) Erfinder:
• **STEINER, Donald
  D-67661 Kaiserslautern (DE)**
• **DIETERICH, Hartmut
  D-81827 München (DE)**
• **BURT, Alastair
  D-67663 Kaiserslautern (DE)**
• **LIND, Jürgen
  D-66121 Saarbrücken (DE)**

(56) Entgegenhaltungen:
**EP-A- 0 547 548**

• **ARIKAWA M: "PERSONAL DYNAMIC MAPS BASED ON DISTRIBUTED GEOGRAPHIC INFORMATION SERVERS" PROCEEDINGS OF THE VEHICLE NAVIGATION AND INFORMATION SYSTEMS CONFERENCE, YOKOHAMA, AUG. 31 - SEPT. 2, 1994,31. August 1994, Seiten 591-596, XP000641362 INSTITUTE OF ELECTRICAL AND ELECTRONICS ENGINEERS**

**Beschreibung**

Die Erfindung betrifft die Ermittlung einer Route von einem Startpunkt zu einem Zielpunkt.

In rechnergestützten Routenplanungssystemen gilt es, zwischen einem vorgebbaren Startpunkt, d. h. einem Ausgangsort, an dem ein Benutzer des Routenplanungssystems eine Reise beginnen möchte und einem Zielpunkt, zu dem der Benutzer reisen möchte, eine Route zu ermitteln in einer Weise, daß sowohl die Ermittlung der Route selbst möglichst schnell erfolgt und die Route hinsichtlich verschiedener, vorgebbarer Anforderungen optimiert ist.

Anforderungen in diesem Sinne können beispielsweise sein eine für die gesamte Route benötigte Reisezeit, die Routenlänge oder auch bestimmte Vorgaben, daß bestimmte Verkehrsmittel bevorzugt benutzt werden sollen.

Unter einer Route ist im weiteren eine Wegbeschreibung, d.h. eine Menge von Knoten und Kanten, wenn der Weg durch einen Graphen repräsentiert wird, der Knoten und Kanten aufweist, von einem Startpunkt zu einem Zielpunkt, zu verstehen.

Aus dem Dokument EP-A-0547548 ist es bekannt, Liniensegmente einer in digitaler Form vorliegende Karte aneinanderzureihen, um so eine nach vorgebbaren Kriterien optimierte Route zwischen einem Startpunkt und einem Zielpunkt zu ermitteln.

Der Artikel ARIKAWA M: 'PERSONAL DYNAMIC MAPS BASED ON DISTRIBUTED GEOGRAPHIC INFORMATION SERVERS' PROCEEDINGS OF THE VEHICLE NAVIGATION AND INFORMATION SYSTEMS CONFERENCE, YOKOHAMA, AUG. 31 - SEPT. 2, 1994,31. August 1994, Seiten 591-596, INSTITUTE OF ELECTRICAL AND ELECTRONICS ENGINEERS bezieht sich auf die dynamische Zusammenstellung einer Karte auf der Basis von Teilkarten unter Verwendung bestimmter konzeptioneller Kriterien.

Die Ermittlung der Route soll möglichst schnell und flexibel durchgeführt werden.

Eine Übersicht über Verfahren zur Ermittlung kürzester Pfade ist in [1] zu finden.

Das Problem wird durch das Verfahren gemäß Patentanspruch 1 sowie durch die Anordnung gemäß Patentanspruch 9 gelöst.

Die Route wird von einem Startpunkt zu einem Zielpunkt in einem iterativen Verfahren ermittelt. Der Startpunkt und der Zielpunkt liegen in unterschiedlichen Teilroutenkarten, wobei die Teilroutenkarten in digitaler Form gespeichert sind. Das Verfahren umfaßt folgende Schritte:

-     Teilmodulen, die jeweils einer Teilroutenkarte zugeordnet sind, werden digitale Nachrichten zugeführt, die jeweils mindestens einen Teilstartpunkt und mindestens einen Teilzielpunkt enthalten, die in der Teilroutenkarte des Teilmoduls liegen, das die jeweilige Nachricht empfängt;

-     von jedem Teilmodul wird mindestens eine Teilroute zwischen dem jeweiligen Teilstartpunkt und dem Teilzielpunkt ermittelt;

-     aus den Teilrouten wird die Route gebildet.

Die Anordnung weist eine Prozessoreinheit auf, die derart eingerichtet ist, daß in einem iterativen Verfahren eine Route von einem Startpunkt zu einem Zielpunkt, die jeweils in unterschiedlichen Teilroutenkarten liegen, ermittelt wird, wobei die Teilroutenkarten in digitaler Form gespeichert sind. Das Verfahren umfaßt folgende Schritte:

-     Teilmodulen, die jeweils einer Teilroutenkarte zugeordnet sind, werden digitale Nachrichten zugeführt, die jeweils mindestens einen Teilstartpunkt und mindestens einen Teilzielpunkt enthalten, die in der Teilroutenkarte des Teilmoduls liegen, das die jeweilige Nachricht empfängt;

-     von jedem Teilmodul wird mindestens eine Teilroute zwischen dem jeweiligen Teilstartpunkt und dem Teilzielpunkt ermittelt;

-     aus den Teilrouten wird die Route gebildet.

Durch die Erfindung wird eine schnelle, flexible Ermittlung einer Route für einen Benutzer von einem vorgebbaren Startpunkt zu einem vorgebbaren Zielpunkt (zu einem vorgebbaren Zeitpunkt) gewährleistet. Dabei wird das äußerst komplexe Problem der Routenermittlung in Teilprobleme aufgespaltet, welches jeweils unabhängig voneinander gelöst wird, wodurch es möglich wird, sowohl zentrales als auch lokales Wissen in Nebenbedingungen der Ermittlung von Teilrouten bzw. der Route zu berücksichtigen.

Weiterbildungen der Erfindung ergeben sich aus den abhängigen Ansprüchen.

Es ist in einer Weiterbildung vorteilhaft, daß die Teilroutenkarten in Form von Teilroutengraphen mit Knoten und Kanten gespeichert sind und zur Ermittlung der Teilroute jeweils ein Verfahren zur Ermittlung kürzester Pfade eingesetzt wird.

Durch Einsatz der Verfahrensermittlung kürzester Pfade ist es in den einzelnen Teilmodulen auf einfache Weise möglich, optimierte Teilrouten hinsichtlich der vorgebbaren Optimierungskriterien zu bilden. Der Einsatz von Verfahren zur Ermittlung kürzester Pfade ist derart zu verstehen, daß jeweils eine Teilroute hinsichtlich einer vorgegebenen Kostenfunktion (Optimierungskriterien) optimiert ermittelt wird. Den Kanten sind jeweils Kostenwerte zugeordnet, die dem vorgegebenen Optimierungskriterium entsprechen.

Vorgebbare Optimierungskriterien können neben der Weglänge oder der Dauer einer Route beispielsweise auch die Minimierung von Abbiegevorgängen, insbesondere von Linksabbiegevorgängen in Städten sein.

Ferner kann der Zeitpunkt, für den die Route geplant werden soll, bei der Erfindung berücksichtigt werden. So kann beispielsweise die Zeit der Reise durchaus von Bedeutung sein, da die Entscheidung, für die Route den Individualverkehr oder den öffentlichen Verkehr zu wählen, vom gewählten Zeitpunkt abhängen kann (während der Berufsverkehrszeit wird man von in einer Innenstadt mit dem Auto vermutlich länger brauchen, als unter Verwendung des öffentlichen Verkehrs; nachts mag die Situation umgekehrt sein).

Ein Ausführungsbeispiel der Erfindung ist in den Figuren dargestellt und wird im weiteren näher erläutert.

Es zeigen

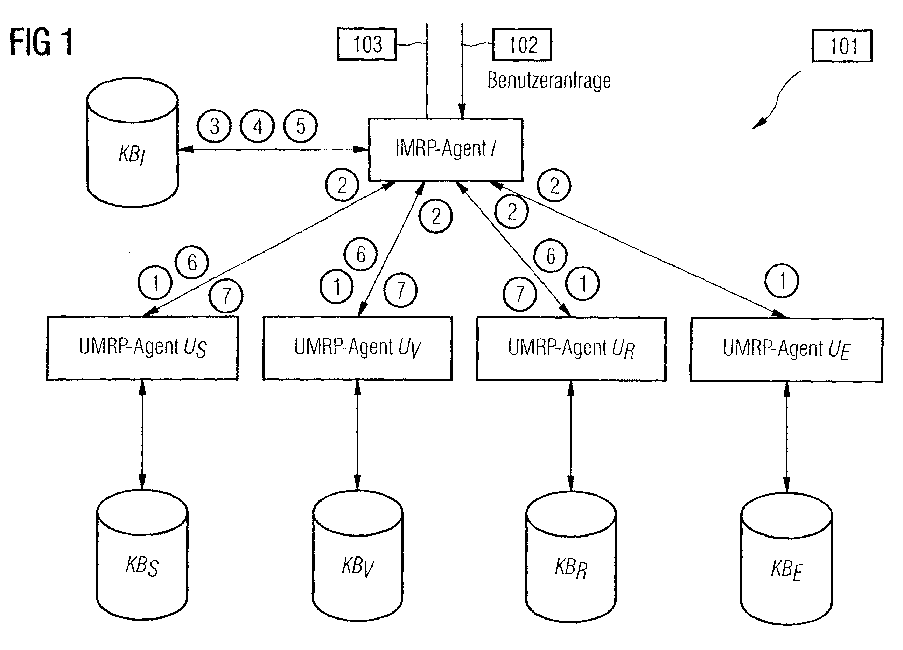

Figur 1 ein Blockdiagramm, in dem die Anordnung sowie der Austausch von Nachrichten zwischen den Software-Agenten beschrieben ist;

Figur 2 eine Skizze von mehreren Teilroutenkarten, anhand welcher Skizze die Erfindung beschrieben wird.

Eine Anordnung 101 zur Ermittlung einer Route aufgrund einer Benutzeranfrage 102, die der Anordnung 101 zugeführt wird, weist folgende Komponenten auf:

Mehrere Software-Agenten. Unter einem Software-Agenten ist ein Programm für eine Datenverarbeitungsanlage zu verstehen, das aufgrund interner Zielvorgaben in der Lage ist, ohne weitere Beeinflussung von außen seine ihm gestellte Aufgabe eigenständig zu lösen. Im weiteren wird ein Software-Agent als Agent bezeichnet.

In einem zentralen Agenten wird die Ermittlung von Routen durchgeführt und koordiniert.

In diesem Ausführungsbeispiel wird davon ausgegangen, daß in der Anordnung 101 verschiedene Landkarten und Verkehrsnetze in Form eines Graphen mit Knoten und Kanten gespeichert sind. Unter einem Verkehrsnetz ist beispielsweise ein Schienennetz zu verstehen.

Den Verkehrsnetzen zugeordnet können beispielsweise Fahrpläne eines öffentlichen Verkehrsnetzes sein. Diese sind ebenfalls in digitaler Form gespeichert.

In der Anordnung 101 sind mehrere Teilmodule vorgesehen. Jedem Teilmodul ist eine Teilroutenkarte zugeordnet. Eine Teilroutenkarte ist beispielsweise ein Verkehrsnetz, das mindestens einen Teil des gesamten, durch die Anordnung berücksichtigten geographischen Gebiets umfaßt.

Die Teilroutenkarten können unterschiedliche geographische Gebiete, oder auch sich überschneidende geographische Gebiete enthalten, wobei in diesem Fall unterschiedliche Verkehrsnetze (Straßenbahnnetz, Busnetz, Eisenbahnnetz) in den Teilroutenkarten enthalten sein können.

Jedes Teilmodul, das durch einen Software-Agenten realisiert ist, ist derart eingerichtet, daß unter Verwendung von Verfahren zur Ermittlung kürzester Pfade in der Teilroutenkarte, die dem jeweiligen Teilmodul zugeordnet ist, mindestens eine Teilroute ermittelt wird. Ergebnis der Teilroute sind jeweils ein Teilzielpunkt und ein Teilstartpunkt, die am Rand der Teilroutenkarte liegen, sowie die Route innerhalb der Teilroutenkarte, die von dem Teilstartpunkt zu dem Teilzielpunkt führt.

Das Verfahren zur Ermittlung der Route aus den Teilrouten wird im weiteren detailliert beschrieben.

Es wird im weiteren davon ausgegangen, daß ein erstes Teilmodul $U_S$ einer ersten Teilroutenkarte $TU_S$ zugeordnet ist, das ein Straßennetz für den Individualverkehr in der Stadt München enthält.

Unter Individualverkehr ist im weiteren der Verkehr unter Verwendung von Kraftfahrzeugen oder auch Fahrrädern zu verstehen.

Ein zweites Teilmodul $U_V$ ist einer zweiten Teilroutenkarte $TU_V$ zugeordnet, die in Form eines Graphen digital gespeichert das Straßennetz der Bayerischen Autobahnen und Fernstraßen enthält.

Ein drittes Teilmodul $U_R$ ist einer dritten Teilroutenkarte $TU_R$ zugeordnet, die ein Straßennetz für den Individualverkehr des Großraums Nürnberg-Erlangen-Fürth beschreibt.

Ein viertes Teilmodul $U_E$ ist einer vierten Teilroutenkarte $TU_E$ zugeordnet, die ein Netz enthält, in dem der gesamte öffentliche Verkehr (Bus, Straßenbahn, Schienenverkehr) in dem Bundesland Bayern gespeichert ist.

Es gilt nun, aufgrund der Benutzeranfrage 102, die einen Startpunkt S und einen Zielpunkt Z (sowie optional Abfahrts- oder Ankunftszeitpunkt) enthält, eine möglichst optimierte Route, d.h. eine Menge zusammenhängender Knoten und Kanten von dem Startpunkt S zu dem Zielpunkt Z, zu ermitteln, wobei die Nutzung unterschiedlicher Verkehrsmittel möglich ist.

In dem Ausführungsbeispiel ist in der Benutzeranfrage 102 angegeben, daß der Benutzer eine Reise vom Otto-Hahn-Ring 6 in München (Startpunkt S) nach Nürnberg, Flaschenhofstr. 55 (Zielpunkt Z) am Montag, den 06. Oktober 1997, machen möchte. Der Benutzer muß spätestens um 10.00 Uhr am Zielpunkt Z eingetroffen sein (Nebenbedingung für die Routenermittlung). Einschränkungen bei der Wahl des Verkehrsmittels gibt es in diesem Ausführungsbeispiel nicht. Das Optimierungskriterium ist die für die Reise benötigte Zeit.

In einem ersten Schritt wird von einem zentralen Agenten I für den Startpunkt S und den Zielpunkt Z eine Menge von Agenten, d.h. Teilmodulen $U_S$, $U_V$, $U_R$, $U_E$, ermittelt, die für die Ermittlung einer Route zwischen dem Startpunkt S und dem Zielpunkt Z in Frage kommen.

Hierfür übersendet der zentrale Agent I an alle ihm bekannten Teilmodule $U_i$ (i = 1 ... m, m = Anzahl der Teilmodule $U_i$) eine erste Nachricht 1. In der ersten Nachricht 1 ist eine Anfrage enthalten, ob der Startpunkt S und/oder der Zielpunkt Z in der Teilroutenkarte $TU_S$,

$TU_V$, $TU_R$, $TU_E$ des jeweiligen Teilmoduls $U_S$, $U_V$, $U_R$, $U_E$ enthalten ist.

Alle Teilmodule $U_S$, $U_V$, $U_R$, $U_E$ senden an den zentralen Agenten I eine zweite Nachricht 2, in der eine Antwort enthalten ist, d.h. eine positive oder eine negative Nachricht, zurück.

Dem ersten Teilmodul $U_S$ und dem vierten Teilmodul $U_E$ ist der Startpunkt S bekannt, d.h. der Startpunkt S liegt in ihrer jeweiligen Teilroutenkarte $TU_S$, $TU_E$.

Dem dritten Teilmodul $U_R$ und dem vierten Teilmodul $U_E$ ist der Zielpunkt Z bekannt, d.h. der Zielpunkt Z liegt in ihrer jeweiligen Teilroutenkarte $TU_R$, $TU_E$.

Die zweite Nachricht 2 von dem ersten Teilmodul $U_S$, dem dritter. Teilmodul $U_R$ sowie dem vierten Teilmodul $U_E$, die jeweils zu dem zentralen Agenten I übertragen werden, enthalten die Information, daß das jeweilige Teilmodul $U_S$, $U_R$, $U_E$ bei der Ermittlung der Route involviert ist.

Das zweite Teilmodul $U_V$ enthält in der ihm zugeordneten Teilroutenkarte weder den Startpunkt S noch den Zielpunkt Z. Somit sendet das zweite Teilmodul $U_V$ sowie weitere Teilmodule $U_i$ (nicht dargestellt), die in der Anordnung enthalten sind, eine zweite Nachricht 2 zurück, in der angegeben ist, daß sowohl der Startpunkt S als auch der Zielpunkt Z dem Teilmodul $U_V$, $U_i$ unbekannt sind, d.h. nicht in ihrer jeweiligen Teilroutenkarte $TU_V$, $TU_i$ liegen.

In der zweiten Nachricht 2 ist für den Fall, daß der Startpunkt S oder der Zielpunkt Z in der jeweiligen Teilroutenkarte enthalten ist, eine Identifikationsangabe enthalten, mit der der Startpunkt S bzw. der Zielpunkt Z in der Teilroutenkarte eindeutig identifiziert werden kann. In diesem Beispiel sind mehrere Teilmodule $U_S$, $U_R$, $U_E$ jeweils für den Startpunkt S bzw. Zielpunkt Z "zuständig", da es sich bei dem ersten Teilmodul $U_S$ und dem dritten Teilmodul $U_R$ um Teilmodule zur Ermittlung von Routen für den Individualverkehr handelt, während das vierte Teilmodul $U_E$ Routen für den öffentlichen Verkehr ermittelt.

In einem weiteren Schritt wird von dem zentralen Agenten I eine Menge von Folgen ermittelt, in denen angegeben ist, welche Folgen von Teilmodulen $U_S$, $U_R$, $U_E$, $U_V$ bei der Ermittlung der Route ausgehend von dem Startpunkt S zu dem Zielpunkt Z in Frage kommen. Hierzu wird eine lokale Wissensbasis $KB_I$ in Form einer Datenbank verwendet, die dem zentralen Agenten I zugänglich ist. In der Wissensbasis sind für jede Kombination von Teilmodulen, in denen ein Start- oder Zielpunkt liegen kann, Folgen von Teilmodulen gespeichert, deren Teilrouten nacheinander verwendet werden, um vom Startpunkt S zum Zielpunkt Z zu gelangen.

Auf Anfrage des zentralen Agenten I wird von der lokalen Wissensbasis $KB_I$ eine dritte Nachricht 3 an den zentralen Agenten I gesendet, der die ermittelten Sequenzen enthält, in diesem Fall:

$$1.\ U_S \rightarrow U_V \rightarrow U_R$$

$$2.\ U_S \rightarrow U_V \rightarrow U_E$$

$$3.\ U_S \rightarrow U_R \rightarrow U_E$$

$$4.\ U_S \rightarrow U_E$$

$$5.\ U_E$$

Diese Sequenzen sind wie im folgenden für den Fall 1 ($U_S \rightarrow U_V \rightarrow U_R$) beschrieben, zu verstehen. Die Route kann als Sequenz der Teilroutenkarte $TU_S$ des ersten Teilmoduls $U_S$, gefolgt von einer Teilroute der Teilroutenkarte $TU_V$ des zweiten Teilmoduls $U_V$ und abschließend einer Teilroute der Teilroutenkarte $TU_R$ des dritten Teilmoduls $U_R$ gebildet werden.

Entsprechendes gilt für die weiteren oben dargestellten Fälle 2 bis 5.

In einem weiteren Schritt werden Teilstartpunkte und Teilzielpunkte der Teilrouten, die von dem ersten Teilmodul $U_S$, dem zweiten Teilmoduls $U_V$ und dem dritten Teilmoduls $U_R$ gebildet werden, ermittelt. Anschaulich bedeutet dies, daß mögliche Übergangspunkte $Ü_{SV}$, $Ü_{VR}$ zwischen Teilroutenkarten $TU_S$, $TU_V$, $TU_R$, die den einzelnen Teilmodulen $U_S$, $U_V$, $U_R$, zugeordnet sind, ermittelt werden.

In der Wissensbasis $KB_I$ des zentralen Agenten I ist eine Liste aller theoretisch möglichen Teilzielpunkte und Teilstartpunkte, die im weiteren als Übergangspunkte $Ü_{SV}$, $Ü_{VR}$ bezeichnet werden, für die jeweiligen Teilroutenkarten $TU_S$, $TU_V$, $TU_R$ gespeichert. Aus der Menge aller möglichen Übergangspunkte $Ü_{SV}$, $Ü_{VR}$ wird eine möglichst kleine Anzahl von Teilstartpunkten und Teilzielpunkten ausgewählt, um somit die Anzahl der zu ermittelnden Teilrouten so gering wie möglich zu halten.

Die Auswahl erfolgt unter Berücksichtigung lokalen Wissens, welches in einer Heuristik zur Ermittlung von Übergangspunkten $Ü_{SV}$, $Ü_{VR}$ einfließt.

Gemäß der Heuristik wird bei einer Gesamtentfernung von dem Startpunkt S zu dem Zielpunkt Z von über 100 km (die Luftlinienentfernung von München nach Nürnberg ist größer als 100 km), versucht, einen möglichst großen Anteil der Route unter Verwendung von Autobahnen abzudecken. Dies bedeutet, daß der zentrale Agent I in seiner Wissensbasis $KB_I$ nach Übergangspunkte $Ü_{SV}$, $Ü_{VR}$ sucht, die einen Teil einer Autobahn repräsentieren, d.h. z.B. einen Autobahnanschluß repräsentieren.

Anschaulich bedeutet dies, daß zwischen der ersten Teilroutenkarte $TU_S$ und der zweiten Teilroutenkarte $TU_V$ bzw. der zweiten Teilroutenkarte $TU_V$ und der dritten Teilroutenkarte TU$_R$ Übergangspunkte ermittelt werden, deren Knoten Orte repräsentieren, die in einer Autobahn enthalten sind oder direkt zu einer Autobahn führen.

In einer vierten Nachricht 4 wird der Wissensbasis KB$_I$ des zentralen Agenten I die Anforderung zur Ermittlung der Übergangspunkte Ü$_{SV}$, Ü$_{VR}$ übergeben.

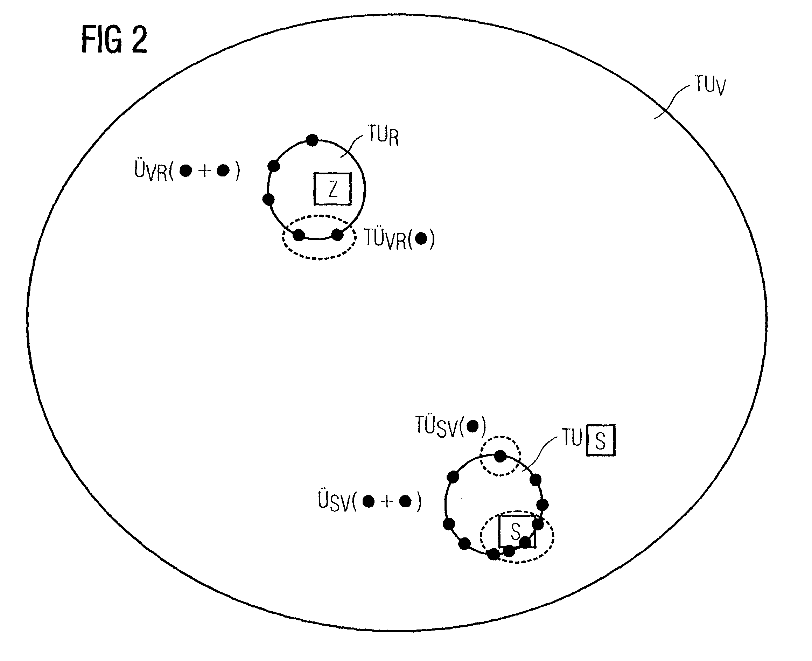

Von der Wissensbasis KB$_I$ wird in einer fünften Nachricht 5 das Ergebnis, d.h. eine Menge von Übergangspunkten Ü$_{SV}$ zwischen den Teilroutenkarten TU$_S$, TU$_V$ des ersten Teilmoduls U$_S$ und des zweiten Teilmoduls U$_V$ und eine Menge von Übergangspunkte Ü$_{VR}$ zwischen Teilroutenkarten TU$_V$, TU$_R$ des zweiten Teilmoduls U$_V$ und des dritten Teilmoduls U$_R$ zurückgesendet. Die Übergangspunkte Ü$_{SV}$, Ü$_{VR}$ sind in Figur 2 durch Punkte gekennzeichnet.

Eine Menge von Übergangspunkte Ü$_{XY}$ (X,Y ∈ N) zwischen Teilroutenkarten besteht im Fall des Übergangs von einem Netz für den Individualverkehr zu einem Netz für den öffentlichen Verkehr, in diesem Fall U$_R$ → U$_E$, U$_V$ → U$_E$ und U$_R$ → UE aus einer Menge von Parkplätzen für Kraftfahrzeuge, die sich in der Nähe einer Station für ein öffentliches Verkehrsmittel befinden.

Im Fall des Übergangs von einem Netz für den öffentlichen Verkehr und einem Netz für den Individualverkehr besteht die Liste aus Taxiständen.

Im Fall des Übergangs von einem Netz für den Individualverkehr zu einem angrenzenden weiteren Netz für den Individualverkehr besteht die Liste aus vorgegebenen Punkten, an denen jeweils eine Straße von einem Netz zu dem anderen Netz übergeht.

In einer sechsten Nachricht 6, die von dem zentralen Agenten I an das erste Teilmodul U$_S$, das zweite Teilmodul U$_V$ und das dritte Teilmodul U$_R$ gesendet werden, wird bei den Teilmodulen U$_S$, U$_V$, U$_R$ angefragt, ob es durch Berücksichtigung lokaler Rahmenbedingungen, die jeweils in einer lokalen Wissensbasis KB$_S$, KB$_V$, KB$_R$, die eindeutig dem jeweiligen Teilmodul U$_S$, U$_V$, U$_R$ zugeordnet ist, andere Übergangspunkte Ü$_{SV}$, Ü$_{VR}$ gibt, die sich hinsichtlich des vorgegebenen Optimierungskriteriums eignen.

Ein solches lokales Wissen ist darin zu sehen, daß dem ersten Teilmodul U$_S$ unter Verwendung seiner ihm zugeordneten lokalen Wissensbasis KB$_S$ bekannt ist, daß - aufgrund von Heuristiken und domänenspezifischem Wissen aus der lokalen Wissensbasis KB$_S$ - für eine längere Reise Richtung Norden von dem vorgegebenen Startpunkt S, der sich relativ weit im Süden Münchens befindet, Übergangspunkte Ü$_{SV}$ im Südosten und im Norden der ersten Teilroutenkarte TU$_S$ zu berücksichtigen sind.

In der lokalen Wissensbasis KB$_V$, die dem zweiten Teilmodul U$_V$ zugeordnet ist, ist angegeben, daß für eine Reise von München nach Nürnberg die Übergangspunkte Ü$_{VR}$ der zweiten Teilroutenkarte TU$_V$ des zweiten Teilmoduls U$_V$ vorteilhaft sind, die im Norden der zweiten Teilroutenkarte TU$_V$ liegen.

Aus den zusätzlichen Vorschlägen, die von den einzelnen Teilmodulen U$_S$, U$_V$, U$_R$ dem zentralen Agenten I zugeführt werden, wird von dem zentralen Agenten I eine Teilmenge TÜ$_{SV}$ für Übergänge von der ersten Teilroutenkarte TU$_S$ und der zweiten Teilroutenkarte TU$_V$. Analog wird für die Übergangspunkte Ü$_{VR}$, die Übergänge zwischen der zweiten Teilroutenkarte TU$_V$ und der dritten Teilroutenkarte TU$_R$ repräsentieren, eine zweite Teilmenge TÜ$_{VR}$ von Übergangspunkten Ü$_{VR}$ ermittelt.

Eine siebte Nachricht 7 wird von dem zentralen Agenten I an das erste Teilmodul U$_S$, das zweite Teilmodul U$_V$ und das dritte Teilmodul U$_R$ gesendet. Die siebte Nachricht 7 enthält jeweils eine Anfrage zur Ermittlung einer oder mehrerer Teilrouten, die hinsichtlich des vorgegebenen Optimierungskriteriums Zeit optimal sind.

In diesem Beispiel wird in der siebten Nachricht 7, die dem ersten Teilmodul U$_S$ zugeführt wird, die Ermittlung von Teilrouten von dem Startpunkt S zu den fünf Übergangspunkten Ü$_{SV}$ der ersten Teilmenge TÜ$_{SV}$, angefragt.

Die siebte Nachricht 7, die dem zweiten Teilmodul U$_V$ zugeführt wird, enthält eine Anfrage zur Ermittlung von Teilrouten aller Kombinationen zwischen den Übergangspunkten Ü$_{SV}$ der ersten Teilmenge TÜ$_{SV}$ und den Übergangspunkten Ü$_{VR}$ der zweiten Teilmenge TÜ$_{VR}$.

Die siebte Nachricht 7, die dem dritten Teilmodul UR zugeführt wird, enthält eine Anfrage zur Ermittlung von Teilrouten von den zwei Übergangspunkten Ü$_{VR}$ der zweiten Teilmenge TÜ$_{VR}$ zum Zielpunkt Z.

Die Gesamtzahl der zu ermittelnden Teilrouten beträgt bei dieser Vorgehensweise 5 + 10 + 2 = 17. Bei Ermittlung aller möglichen Teilrouten für alle in Frage kommenden Übergangspunkte Ü$_{VS}$, Ü$_{VR}$ der Teilroutenkarten wäre im vorliegenden Fall eine Größenordnung von 2000 bis 3000 Ermittlungen erforderlich (ausgehend von einer Gesamtzahl möglicher Übergangspunkte in der Größenordnung von 50).

Die Ermittlung der Teilrouten in den Teilmodulen erfolgt unter Verwendung von Verfahren zur Ermittlung kürzester Pfade, beispielsweise dem Verfahren nach Dijkstra. Den jeweiligen Knoten und/oder Kanten der Teilroutenkarte sind jeweils Kostenwerte zugeordnet, die im Rahmen der Optimierung zur Ermittlung der Teilroute innerhalb der Teilroutenkarte in einer Kostenfunktion berücksichtigt werden. Die Kostenwerte und die Art der Berücksichtigung hängen ab von der Art des Optimierungskriteriums. Mögliche Optimierungskriterien sind die für die Reise insgesamt benötigte Zeit, die zu minimierende gesamte Routenlänge, oder weiteren Rahmenbedingungen. So wird für den Fall, daß ein bestimmtes Verkehrsmittel nicht verwendet werden soll, das jeweilige Teilmodul, das für das Verkehrsmittel "zuständig" ist, nicht mit der Berechnung einer Teilroute beauftragt.

Nachdem alle Teilrouten von den Teilmodulen dem zentralen Agenten I zugeführt wurden, wird von dem zentralen Agenten I eine Route ermittelt, wobei die Route eine Menge zusammenhängender Knoten und Kanten, ausgehend von dem Startpunkt S hin zu dem Zielknoten Z, ist. Die hinsichtlich des Optimierungskriteriums "Zeit" beste Route wird von dem zentralen Agenten I ausgewählt.

Das für die erste Sequenz $U_S \rightarrow U_V \rightarrow U_R$ oben beschriebene Verfahren wird für alle weiteren Sequenzen entsprechend durchgeführt.

Es ist jedoch zu beachten, daß bei Übergängen zwischen einem Netz für den Individualverkehr und einem Netz für den öffentlichen Verkehr jeweils noch Übergangszeiten für den Wechsel des Verkehrsmittels und diskrete Abfahrtszeiten des jeweiligen öffentlichen Verkehrsmittels zu berücksichtigen sind. Dies ist bei dem Übergang zwischen Netzen für den Individualverkehr nicht erforderlich.

Als Route wird im Gesamtergebnis diejenige ausgewählt, die hinsichtlich des Optimierungskriteriums optimiert ist.

Die ausgewählte Route wird dem Benutzer als Antwort 103 seiner Benutzeranfrage 102 als Ergebnis zur Verfügung gestellt, beispielsweise auf einem Bildschirm angezeigt oder in anderer Form ausgegeben.

Im weiteren werden einige Alternativen zu dem oben beschriebenen Ausführungsbeispiel aufgezeigt.

In dem Ausführungsbeispiel sind dem zentralen Agenten I alle erheblichen Teilmodule, die für die Ermittlung der Route erforderlich sind, bekannt. In einer Variante ist jedoch vorgesehen, daß die Information über erforderliche Teilmodule in weiteren Agenten gespeichert ist. Die Information wird dann von dem zentralen Agenten I abgefragt.

In einer Variante der Erfindung ist es ferner vorgesehen, daß die möglichen Folgen von Teilroutenkarten nicht in der Wissensbasis $KB_I$ des zentralen Agenten I, sondern in einem weiteren Agenten gespeichert ist. In diesem Fall würde auch diese Information von dem weiteren Agenten durch den zentralen Agenten I abgefragt.

Für die Sequenzen 2 bis 5 kann in einer Variante der Fall eintreten, daß der letzte Abschnitt der Reise mit einem Taxi zurückgelegt wird. Dies bedeutet, daß die Folge um das weitere Teilmodul $U_R$ (Ergänzung der Folgen um das Postfix "$\rightarrow U_R$") ergänzt werden müßte, da zwar das letzte Teilmodul $U_R$ nicht den genauen Weg zu dem Zielpunkt Z, jedoch die für das letzte Teilstück benötigte Zeit ermitteln müßte.

Im Rahmen dieses Dokuments wurden folgende Veröffentlichungen zitiert:

[1] B. V. Cherkassky et al, Shortest Path Algorithms, Theory and Experimental Evaluation Mathematical Programming, Vol. 73, Nr. 2, S. 129 - 174, 1996

**Patentansprüche**

**1.** Verfahren zur rechnergestützten Ermittlung einer Route von einem Startpunkt zu einem Zielpunkt, die jeweils in unterschiedlichen Teilroutenkarten liegen, wobei die Teilroutenkarten in digitaler Form gespeichert sind,
bei dem in einem iterativen Verfahren, welches folgende Schritte umfaßt, die Route von dem Startpunkt zu dem Zielpunkt ermittelt wird:

- Teilmodulen, die jeweils einer Teilroutenkarte zugeordnet sind, werden digitale Nachrichten zugeführt, die jeweils mindestens einen Teilstartpunkt und mindestens einen Teilzielpunkt enthalten, die in der Teilroutenkarte des Teilmoduls liegen, das die jeweilige Nachricht empfängt,
- von jedem Teilmodul wird mindestens eine Teilroute zwischen dem jeweiligen Teilstartpunkt und dem Teilzielpunkt ermittelt,
- aus den Teilrouten wird die Route gebildet.

**2.** Verfahren nach Anspruch 1,
bei dem die Teilroutenkarten in Form von Teilroutengraphen mit Knoten und Kanten gespeichert sind.

**3.** Verfahren nach Anspruch 2,
bei dem die Route eine Menge zusammenhängender Knoten und Kanten zwischen dem Startpunkt und dem Zielpunkt ist.

**4.** Verfahren nach einem der Ansprüche 1 bis 3,
bei dem in einem Zentralmodul eine Datenbank gespeichert ist, anhand der mögliche Verkettungen von Teilmodulen ermittelt werden.

**5.** Verfahren nach einem der Ansprüche 1 bis 4,
bei dem die Teilmodulen Software-Agenten sind.

**6.** Verfahren nach einem der Ansprüche 1 bis 5,
bei dem in jedem Teilmodul eine Teil-Datenbank gespeichert ist, anhand der mindestens eine optimierte Route in dem Teilmodul ermittelt wird.

**7.** Verfahren nach einem der Ansprüche 1 bis 6,
bei dem zur Ermittlung der Teilroute jeweils ein Verfahren zur Ermittlung kürzester Pfade eingesetzt wird.

**8.** Verfahren nach einem der Ansprüche 1 bis 7,
bei dem die Ermittlung der Teilroute derart erfolgt, daß die Teilroute hinsichtlich einer Kostenfunktion optimiert wird.

**9.** Anordnung zur rechnergestützten Ermittlung einer Route von einem Startpunkt zu einem Zielpunkt, die jeweils in unterschiedlichen Teilroutenkarten liegen, wobei die Teilroutenkarten in digitaler Form gespeichert sind,

mit mindestens einer Prozessoreinheit, die derart eingerichtet ist, daß in einem iterativen Verfahren, welches folgende Schritte umfaßt, die Route von dem Startpunkt zu dem Zielpunkt ermittelt wird:

- Teilmodulen, die jeweils einer Teilroutenkarte zugeordnet sind, werden digitale Nachrichten zugeführt, die jeweils mindestens einen Teilstartpunkt und mindestens einen Teilzielpunkt enthalten, die in der Teilroutenkarte des Teilmoduls liegen, das die jeweilige Nachricht empfängt,
- von jedem Teilmodul wird mindestens eine Teilroute zwischen dem jeweiligen Teilstartpunkt und dem Teilzielpunkt ermittelt,
- aus den Teilrouten wird die Route gebildet.

10. Anordnung nach Anspruch 9,
bei der die Prozessoreinheit derart eingerichtet ist, daß die Teilroutenkarten in Form von Teilroutengraphen mit Knoten und Kanten gespeichert sind.

11. Anordnung nach Anspruch 10,
bei der die Prozessoreinheit derart eingerichtet ist, daß die Route eine Menge zusammenhängender Knoten und Kanten zwischen dem Startpunkt und dem Zielpunkt ist.

12. Anordnung nach einem der Ansprüche 9 bis 11,
bei der die Prozessoreinheit derart eingerichtet ist, daß in einem Zentralmodul eine Datenbank gespeichert ist, anhand der mögliche Verkettungen von Teilmodulen ermittelt werden.

13. Anordnung nach einem der Ansprüche 9 bis 12,
bei der die Prozessoreinheit derart eingerichtet ist, daß die Teilmodulen Software-Agenten sind.

14. Anordnung nach einem der Ansprüche 9 bis 13,
bei der die Prozessoreinheit derart eingerichtet ist, daß in jedem Teilmodul eine Teil-Datenbank gespeichert ist, anhand der mindestens eine optimierte Route in dem Teilmodul ermittelt wird.

15. Anordnung nach einem der Ansprüche 9 bis 14,
bei der die Prozessoreinheit derart eingerichtet ist, daß zur Ermittlung der Teilroute jeweils ein Verfahren zur Ermittlung kürzester Pfade eingesetzt wird.

16. Anordnung nach einem der Ansprüche 9 bis 15,
bei der die Prozessoreinheit derart eingerichtet ist, daß die Ermittlung der Teilroute derart erfolgt, daß die Teilroute hinsichtlich einer Kostenfunktion optimiert wird.

**Claims**

1. Method for determining a route from a starting point to a destination point with computer support, said points each being located in different maps which cover parts of the same route, the maps which cover parts of the same route being stored in digital form, in which the route is determined from the starting point to the destination point in an iterative method which comprises the following steps:

- submodules which are each assigned to a map covering part of a route are supplied with digital messages which each contain at least one substarting point and at least one subdestination point which are located in the map covering part of a route in the submodule which receives the respective message,
- at least one subroute between the respective substarting point and the subdestination point is determined by each submodule,
- the route is formed from the subroutes.

2. Method according to Claim 1, in which the maps which cover parts of the same route are stored in the form of graphs which cover parts of the same route and have nodes and edges.

3. Method according to Claim 2, in which the route is a set of coherent nodes and edges between the starting point and the destination point.

4. Method according to one of Claims 1 to 3, in which a database by means of which possible concatenations of submodules are determined is stored in a central module.

5. Method according to one of Claims 1 to 4, in which the submodules are software agents.

6. Method according to one of Claims 1 to 5, in which each submodule has stored in it a subdatabase, by means of which at least one optimized route is determined in the submodule.

7. Method according to one of Claims 1 to 6, in which in each case a method for determining the shortest paths is used to determine the subroute.

8. Method according to one of Claims 1 to 7, in which the subroute is determined in such a way that the subroute is optimized in terms of a cost function.

9. Arrangement for determining a route from a starting point to a destination point with computer support, said points each being located in different maps which cover parts of the same route, the maps which cover parts of the same route being stored in digital form, having at least one processor unit, which is configured in such a way that the route from the starting point to the destination point is determined in an iterative method which comprises the following steps:

- submodules which are each assigned to a map covering part of a route are supplied with digital messages which each contain at least one substarting point and at least one subdestination point which are located in the map covering part of a route in the submodule which receives the respective message,
- at least one subroute between the respective substarting point and the subdestination point is determined by each submodule,
- the route is formed from the subroutes.

10. Arrangement according to Claim 9, in which the processor unit is configured in such a way that the maps which cover parts of the same route are stored in the form of graphs which cover parts of the same route and have nodes and edges.

11. Arrangement according to Claim 10, in which the processor unit is configured in such a way that the route is a set of coherent nodes and edges between the starting point and the destination point.

12. Arrangement according to one of Claims 9 to 11, in which the processor unit is configured in such a way that a database by means of which possible concatenations of submodules are determined is stored in a central module.

13. Arrangement according to one of Claims 9 to 12, in which the processor unit is configured in such a way that the submodules are software agents.

14. Arrangement according to one of Claims 9 to 13, in which the processor unit is configured in such a way that each submodule has stored in it a subdatabase by means of which at least one optimized route is determined in the submodule.

15. Arrangement according to one of Claims 9 to 14, in which the processor unit is configured in such a way that in each case a method for determining the shortest paths is used to determine the subroute.

16. Arrangement according to one of Claims 9 to 15, in which the processor unit is configured in such a way that the subroute is determined in such a way that the subroute is optimized in terms of a cost function.

**Revendications**

1. Procédé destiné à la détermination assistée par ordinateur d'un itinéraire entre un point de départ et un point de destination, qui se trouvent l'un et l'autre sur des cartes différentes d'itinéraires partiels, les cartes d'itinéraires partiels étant mémorisées sous forme numérique,
   au cours duquel on détermine l'itinéraire entre le point de départ et le point de destination, grâce à un procédé itératif, qui comporte les étapes suivantes:

   - des modules partiels, qui sont respectivement affectés à une carte d'itinéraires partiels, reçoivent des messages numériques qui comportent chacun au moins un point de départ partiel et au moins un point de destination partiel, qui se trouvent sur la carte d'itinéraires partiels du module partiel qui reçoit le message respectif,
   - chaque module partiel détermine au moins un itinéraire partiel entre le point de départ partiel et le point de destination respectifs,
   - à partir des itinéraires partiels, on compose l'itinéraire.

2. Procédé selon la revendication 1
   dans lequel les cartes d'itinéraires partiels sont mémorisées sous forme de graphes d'itinéraires partiels avec des noeuds et des segments.

3. Procédé selon la revendication 2
   dans lequel l'itinéraire est un ensemble de noeuds et de segments cohérents entre le point de départ et le point de destination.

4. Procédé selon l'une des revendications 1 à 3
   dans lequel est mémorisée, dans un module central, une banque de données grâce à laquelle on détermine des enchaînements possibles de modules partiels.

5. Procédé selon l'une des revendications 1 à 4
   dans lequel les modules partiels sont des agents logiciels.

6. Procédé selon l'une des revendication 1 à 5
   dans lequel est mémorisée, dans chaque module partiel, une banque partielle de données à l'aide de laquelle on détermine, dans le module partiel, au moins un itinéraire optimisé.

7. Procédé selon l'une des revendications 1 à 6
   dans lequel on utilise, pour la détermination de chaque itinéraire partiel, un procédé destiné à déterminer les cheminements les plus courts.

8. Procédé selon l'une des revendications 1 à 7

dans lequel la détermination des itinéraires partiels se fait de telle sorte que l'itinéraire partiel est optimisé au regard d'une fonction de coûts.

**9.** Dispositif prévu pour la détermination assistée par ordinateur d'un itinéraire entre un point de départ et un point de destination, qui se trouvent l'un et l'autre sur des cartes différentes d'itinéraires partiels, les cartes d'itinéraires partiels étant mémorisées sous forme numérique,
avec au moins une unité processeur conçue de telle sorte que l'itinéraire entre le point de départ et le point de destination est déterminé à l'aide d'un procédé itératif comportant les étapes suivantes:

- des modules partiels, qui sont respectivement affectés à une carte d'itinéraires partiels, reçoivent des messages numériques qui comportent chacun au moins un point de départ partiel et au moins un point de destination partiel, qui se trouvent sur la carte d'itinéraires partiels du module partiel qui reçoit le message respectif,
- chaque module partiel détermine au moins un itinéraire partiel entre le point de départ partiel et le point de destination respectifs,
- à partir des itinéraires partiels, on compose l'itinéraire.

**10.** Dispositif selon la revendication 9
dans lequel l'unité processeur est conçue de telle sorte que les cartes d'itinéraires partiels sont mémorisées sous forme de graphes d'itinéraires partiels avec des noeuds et des segments.

**11.** Dispositif selon la revendication 10
dans lequel l'unité processeur est conçue de telle sorte que l'itinéraire est un ensemble de noeuds et de segments cohérents entre le point de départ et le point de destination.

**12.** Dispositif selon l'une des revendications 9 à 11
dans lequel l'unité processeur est conçue de telle sorte qu'est mémorisée, dans un module central, une banque de données grâce à laquelle on détermine des enchaînements possibles de modules partiels.

**13.** Dispositif selon l'une des revendications 9 à 12
dans lequel l'unité processeur est conçue de telle sorte que les modules partiels sont des agents logiciels.

**14.** Dispositif selon l'une des revendications 9 à 13
dans lequel l'unité processeur est conçue de telle sorte qu'est mémorisée, dans chaque module partiel, une banque partielle de données à l'aide de laquelle on détermine, dans le module partiel, au moins un itinéraire optimisé.

**15.** Dispositif selon l'une des revendications 9 à 14 dans lequel l'unité processeur est conçue de telle sorte que, pour la détermination de chaque itinéraire partiel, on utilise un procédé destiné à déterminer les cheminements les plus courts.

**16.** Dispositif selon l'une des revendications 9 à 15 dans lequel l'unité processeur est conçue de telle sorte que la détermination des itinéraires partiels se fait de telle manière que l'itinéraire partiel est optimisé au regard d'une fonction de coûts.

FIG 1

FIG 2

TUV

ÜVR( ● + ● )

TUR

Z

TÜVR( ● )

TÜSV( ● )

TU S

ÜSV( ● + ● )

S